# EUROPEAN PATENT APPLICATION

(11) **EP 2 075 117 A2**
(43) Date of publication of application: **01.07.2009**
(21) Application number: 08254115.2
(22) Date of filing: 23.12.2008
(51) Int. Cl.: B32B 3/04, B32B 27/06, B32B 25/04

(54) **Multi-layered molded article with moisture protection**

(30) Priority: 26.12.2007 CN 200710203410
(71) Applicant: FIH (Hong Kong) Limited, Hong Kong (HK)
(72) Inventor: Wu, Kun-Tsan, Shindian City, Taipei Hsien, Taiwan 231 (CN); Tien, Li-Wen, Shindian City, Taipei Hsien, Taiwan 231 (CN)
(74) Representative: Craven, Ian

(57) **Abstract**

A multi-layered molded article (100) includes a soft layer (12) and a substrate (14) moldingly bonded to the soft layer. The substrate has a bonding surface (142) bonded to the soft layer and peripheral end surfaces (146) at the edges of the substrate, at least partially covered by the soft layer.

## Description

### 1. Field of the Invention

The present invention relates to multi-layer molded articles.

### 2. Description of related art

Molded articles, such as molded shells, are widely used in many technological fields. One example is a molded shell used with a portable electronic device (e.g., a mobile phone) for protecting internal electronic components. Another example is a molded shell used with furniture (e.g., a mini sofa) to provide decoration.

The molded shells may include a plastic substrate having some kind of decorative and/or protective (hereinafter "second") layer formed thereon. The molded shell may be made using an insert molding process. The second layer is placed in the mold cavity and then bonds to the molten plastic injected into the mold for forming the substrate.

Various difficulties may be faced when manufacturing this multi-layer molded article.

Therefore, there is room for improvement within the art.

### BRIEF DESCRIPTION OF THE DRAWINGS

Many aspects of the multi-layered molded article can be better understood with reference to the following drawing. The components in the drawings are not necessarily drawn to scale, the emphasis instead being placed upon clearly illustrating the principles of the multi-layered molded article. Moreover, in the drawings like reference numerals designate corresponding parts throughout the several views.

FIG. 1 is a cross-section view of a first exemplary embodiment of a multi-layered molded article.

FIG. 2 is an enlarged view of a circled portion II of FIG. 1.

FIG. 3 is a cross-section view of a second exemplary embodiment of a multi-layered molded article.

FIG. 4 is a cross-section view of a third exemplary embodiment of a multi-layered molded article.

FIG. 5 is a cross-section view of a fourth exemplary embodiment of a multi-layered molded article.

### DETAILED DESCRIPTION OF THE EXEMPLARY EMBODIMENTS

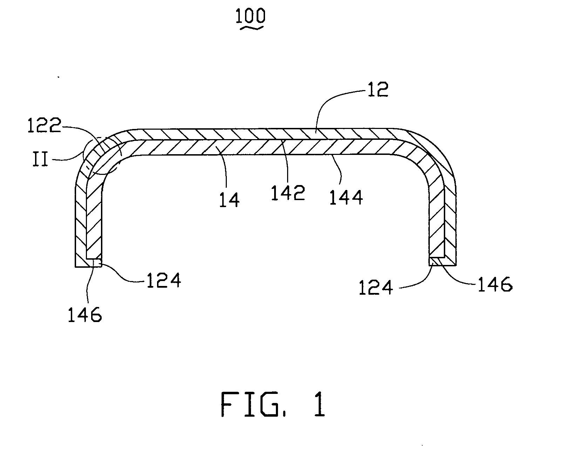

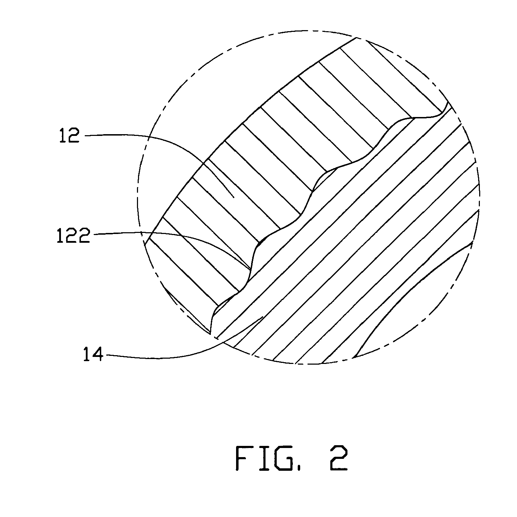

Referring to FIG. 1 and FIG. 2, in a first exemplary embodiment, a first multi-layered molded article 100 is shown. The Article 100 includes a soft layer 12 and a first substrate 14 moldingly bonded to the soft layer 12.

The soft layer 12 can be made of a material that is soft relative to the first substrate 14. Exemplary soft materials include leather (natural and artificial), all types of fabrics, woven clothes, textiles, and nylon. One surface of the soft layer 12 acts as a bonding surface 122. The bonding surface 122 should have a rough or coarse surface, formed by, for example, a plurality of tiny pores or projections (schematically shown). For some soft materials, the pores and projections of the bonding surface 122 may be a natural property of the material. For other soft materials, the pores and projections may be formed by grinding or sandblasting the bonding surface 122. The tiny pores and projections of the bonding surface 122 interlock with the molten material used to make the first substrate 14, thereby increasing the bonding of the soft layer 12 to the first substrate 14.

The first substrate 14 can be formed by injection molding a moldable material. The moldable material can be any of plastic, rubber, and silicone. The plastic material can be any of polyvinylchloride resin (PVC), polyethylene terephthalate (PET), acrylonitrile-butadiene-styrene (ABS), polycarbonate (PC), polyimide (PI), liquid crystal polymer (LCP), polyetherimide (PEI), polyphenylene sulfide (PPS), polystyrene (PS), polypropylene (PP). In particular, ABS and PC exhibit good adhesion to many softer materials.

The first substrate 14 includes a first attaching surface 142, a first molding surface 144 opposite to the first attaching surface 142, and first peripheral end surfaces 146 at the edges of the first substrate 14. The first substrate 14 is molded onto the soft layer 12 by using, for example, methods set forth in some of our related applications. The first attaching surface 142 and the first peripheral end surfaces 146 of the first substrate 14 bond to and interlock with the bonding surface 122 of the soft layer 12. A peripheral end 124 of the soft layer 12 covers first peripheral end surfaces 146.

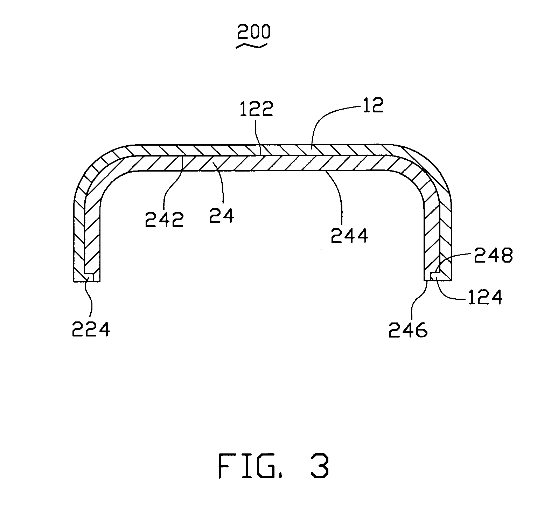

Referring to FIG. 3, in a second embodiment, a second multi-layered molded article 200 includes the soft layer 12 and a second substrate 24 moldingly bonded to and interlocked with the soft layer 12. The second substrate 24 includes a second attaching surface 242, a second molding surface 244 opposite the second attaching surface 242, and second peripheral end surfaces 246 at the edges of the second substrate 24. The second substrate 24 has first peripheral notches 248 defined in the second attaching surface 242 and second peripheral end surfaces 246. The second substrate 24 is molded onto the soft layer 12 by using, for example, methods set forth in some of our related applications. The second attaching surface 242 bonding to and interlocking with the bonding surface 122 of the soft layer 12. The peripheral ends 124 of the soft layer 12 are embedded in first peripheral notches 248 of the second substrate 24. That is, the soft layer 12 covers the second attaching surface 242 and at least part of the second peripheral end surfaces 246.

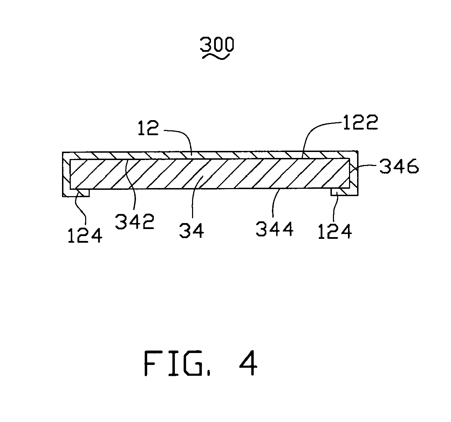

Referring to FIG. 4, in a third embodiment, a third multi-layered molded article 300 includes the soft layer 12 and a third substrate 34 moldingly bonded to the soft layer 12. The third substrate 34 includes a third attaching surface 342, a third molding surface 344 opposite third attaching surface 342, and third peripheral end surfaces 346 at edges of the third substrate 34. The third substrate 34 is molded onto the soft layer 12, by using, for example, methods set forth in some of our related applications. The third attaching surface 342 and the third peripheral end surfaces 346 of the third substrate 34 bond to and interlock with the bonding surface 122 of the soft layer 12. Advantageously, the third molding surface 344 is also attached to the bonding surface 122 of the soft layer 12. That is, the soft layer 12 covers the third attaching surface 342, third peripheral end surfaces 346, and at least part of the third molding surface 344.

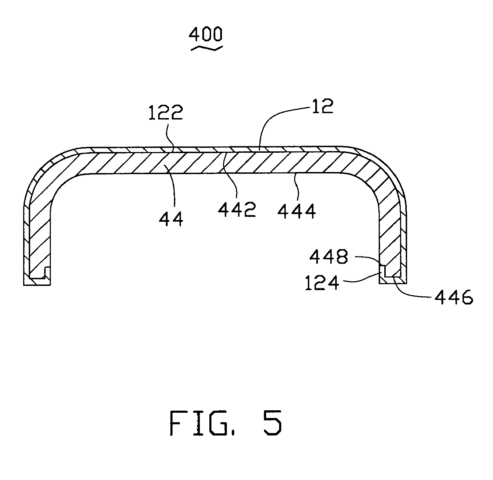

Referring to FIG. 5, in a fourth embodiment, a fourth multi-layered molded article 400 includes the soft layer 12 and a fourth substrate 44 moldingly bonded to the soft layer 12. The fourth substrate 44 includes a fourth attaching surface 442, a fourth molding surface 444 opposite the fourth attaching surface 442, and fourth peripheral end surfaces 446 at the edges of the fourth substrate 44. The fourth substrate 44 has second peripheral notches 448 defined in the fourth molding surface 444 and fourth peripheral end surfaces 446. The fourth substrate 44 is molded onto the soft layer 12, by using, for example, methods set forth in some of our related applications. The fourth attaching surface 442 and the fourth peripheral end surfaces 446 of the fourth substrate 44 bond to and interlock with the bonding surface 122 of the soft layer 12. The peripheral ends 124 of the soft layer 12 are embedded in second peripheral notches 448 of the fourth substrate 24. That is, the soft layer 12 covers the fourth attaching surface 442, the fourth peripheral end surfaces 446, and at least part of the fourth molding surface 444.

Thus, as can be seen from the various exemplary embodiments, moisture is prevented from entering between the soft layer 12 and the substrate.

It should be also understood, however, that even though numerous characteristics and advantages of the present embodiments have been set forth in the foregoing description, together with details of the structures and functions of the embodiments, the disclosure is illustrative only, and changes may be made in detail, especially in matters of shape, size, and arrangement of parts within the principles of the invention to the full extent indicated by the broad general meaning of the terms in which the appended claims are expressed.

## Claims

1. A multi-layered molded article, comprising:
a soft layer; and
a substrate moldingly attached to the soft layer, the substrate having an attaching surface attached to the soft layer and at least one peripheral end surface at an edge of the substrate;
wherein the soft layer covers at least part of the at least one peripheral end surface.

2. The multi-layered molded article as claimed in claim 1, wherein the soft layer is made of one of leather, fabrics, woven clothes, textiles, and nylon.

3. The multi-layered molded article as claimed in claim 1, wherein the soft layer has a bonding surface having a plurality of tiny pores or protrusions interlocked with the substrate.

4. The multi-layered molded article as claimed in claim 1, wherein the substrate is made of one of plastic, rubber, and silicone.

5. The multi-layered molded article as claimed in claim 1, wherein the substrate has peripheral notches defined in a bonding surface and peripheral end surfaces, a peripheral end of the soft layer being embedded in the peripheral notch.

6. The multi-layered molded article as claimed in claim 5, wherein the substrate further includes a molding surface opposite to the bonding surface, the soft layer covering the attaching surface, the peripheral end surface, and at least part of the molding surface.

7. The multi-layered molded article as claimed in claim 1, wherein the substrate further includes a molding surface opposite the attaching surface, the substrate including a peripheral notch defined in the molding surface and the peripheral end surfaces, a peripheral end of the soft layer being embedded in the peripheral notch.

8. The multi-layered molded article as claimed in claim 1, wherein the soft layer is made of a material selected from the group consisting of leather, fabrics, woven clothes, textiles, and nylon, and the substrate is made of a material selected from the group consisting of acrylonitrile-butadiene-styrene and polycarbonate.
